# DEMANDE DE BREVET EUROPEEN

(11) **EP 1 414 188 A2**
(43) Date de publication de la demande: **28.04.2004**
(21) Numéro de dépôt: 03292616.4
(22) Date de dépôt: 21.10.2003
(51) Int. Cl.: H04L 12/26

(54) **Capture de données sur un lien informatique avec échantillonage**

(30) Priorité: 21.10.2002 FR 0213058
(71) Demandeur: FRANCE TELECOM, 75015 Paris (FR)
(72) Inventeur: Simon, Jean-Louis, 22300 Lannion (FR); Cicutto, René, 22300 Lannion (FR); Adam, Yann, 22220 Treguier (FR)
(74) Mandataire: Texier, Christian

(57) **Abrégé**

L'invention concerne un dispositif de capture de données sur un lien informatique, le dispositif de capture comprenant un échantillonneur de paquets (200), cet échantillonneur (200) étant prévu pour réaliser l'échantillonnage à l'extérieur du lien informatique, le dispositif de capture incluant un coupleur (100) qui raccorde l'échantillonneur (200) au lien informatique, caractérisé en ce qu'il inclut une interface haut-débit (150) placée entre l'échantillonneur (200) et le coupleur (100), et une interface bas-débit (250) en sortie de l'échantillonneur (200).

## Description

L'invention concerne la capture de paquets de données sur des liens informatiques, et plus particulièrement sur des interfaces très haut débit. Les débits des interfaces réseaux sont de plus en plus élevés : 2,5, voire même 10 Gbit/s.

Il est très difficile en l'état de la technologie de capturer tous les paquets qui circulent sur une interface très haut débit et encore plus difficile de réaliser des calculs en temps réel sur ces flux.

De plus, la capture exhaustive est très rarement nécessaire quand on s'intéresse aux caractéristiques du trafic, aux temps de transfert, à la gigue ou même au taux de pertes. Dans ces conditions, une solution consiste à ne pas prendre tous les paquets qui circulent sur ces artères.

Pour cela, on a proposé des sondes de type interne, par exemple connues sous le nom de NETFLOW (marque déposée) qui pratiquent un échantillonnage des paquets de manière à ne délivrer qu'une partie d'entre eux.

Ces sondes présentent l'inconvénient d'être perturbées par le fonctionnement des routeurs sur lesquels elles sont activées, en entraînant une baisse très significative des performances de précision de ces outils (cas CISCO). Réciproquement, les routeurs CISCO peuvent être perturbés par l'activation de NETFLOW.

Ainsi, les sondes internes aux équipements de routage s'avèrent présenter un inconvénient majeur de par la perturbation qu'elles provoquent et qu'elles subissent.

On connaît par ailleurs des sondes, cette fois de type externe, connues par exemple sous le nom de OC3 MON, NET VCR, qui font une capture exhaustive. En d'autres termes, elles prélèvent la totalité des données.

Elles se limitent de ce fait à des débits relativement faibles, en l'occurrence inférieurs ou égaux à 1Gbit/s. De telles sondes sont de plus coûteuses de part leur grosse capacité de traitement. En outre, une trop grande quantité d'informations prélevées est difficile à gérer, à traiter, à stocker, et finalement pas utile à la pertinence des indicateurs recherchés.

Au bilan, les sondes internes subissent une perturbation des routeurs ou interfaces, et les sondes externes ne permettent pas d'obtenir des informations sur les grosses artères de coeur de réseau car elles ne sont pas adaptées à l'obtention de telles informations.

Le but de l'invention est de palier les inconvénients des sondes internes tout en gardant l'avantage de l'obtention d'une partie seulement des données véhiculées, afin de fournir efficacement les indicateurs recherchés sans perte de précision ou avec une perte de précision contrôlée.

Un but de l'invention est, en outre, de permettre une adaptation des sondes existantes à la mesure sur des artères à très haut débit.

Ces buts sont atteints selon l'invention grâce à un dispositif de capture de données sur un lien informatique, le dispositif de capture comprenant un échantillonneur de paquets, cet échantillonneur étant prévu pour réaliser l'échantillonnage à l'extérieur du lien informatique, le dispositif de capture incluant un coupleur qui raccorde l'échantillonneur au lien informatique, caractérisé en ce qu'il inclut une interface haut-débit placée entre l'échantillonneur et le coupleur, et une interface bas-débit en sortie de l'échantillonneur.

On propose également selon l'invention un procédé de capture de données sur un lien informatique, à l'aide d'un échantillonneur de paquets de données, dans lequel on place l'échantillonneur de manière externe au lien à étudier, en reliant l'échantillonneur au lien informatique par l'intermédiaire d'un coupleur, caractérisé en ce que l'on place une interface haut-débit entre l'échantillonneur et le coupleur et une interface bas-débit en sortie de l'échantillonneur.

D'autres caractéristiques, buts et avantages de l'invention apparaîtront à la lecture de la description détaillée qui va suivre faisant référence aux figures annexées sur lesquelles :
- la figure 1 est un schéma représentant la structure d'un dispositif selon l'invention ;
- la figure 2 est un schéma représentant un dispositif selon une variante de l'invention ;
- la figure 3 est un schéma représentant une variante de l'invention dans un mode de fonctionnement avec utilisation d'une mémoire de type « premier entré - premier sorti ».
- la figure 4 est un schéma représentant une variante de l'invention munie d'une interface de type PCI.

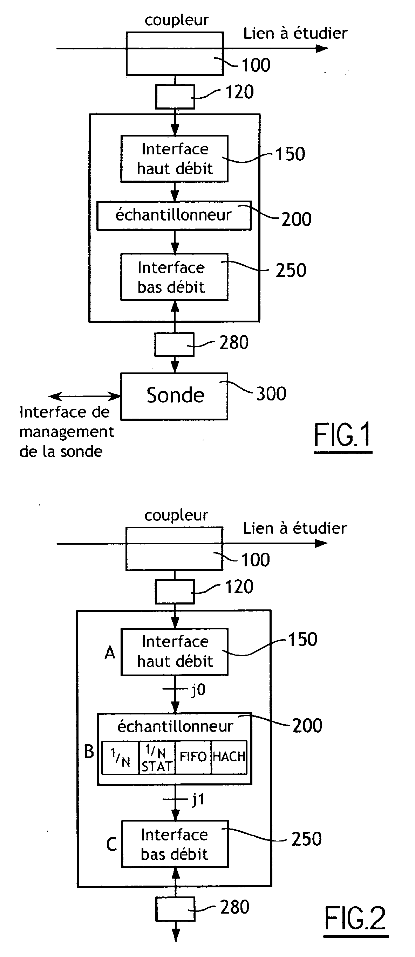

Tel que représenté sur la figure 1, le dispositif de capture de données s'articule autour d'un coupleur optique 100 placé sur le lien à étudier, d'un échantillonneur de paquets 200 placé en aval de ce coupleur 100, et d'une sonde 300 elle-même en aval de l'échantillonneur.

Le rôle de l'échantillonneur 200 est de prélever des échantillons qui représentent une faible partie de ceux qui passent sur le lien à étudier.

L'échantillonneur 200 intercepte pour cela une faible partie des paquets arrivant sur lui via une interface haut-débit 150, placée entre lui et le coupleur.

Il les restitue ensuite sur une interface bas-débit 250 placée en aval, entre lui et la sonde.

La sonde 300 est ici une sonde ayant une interface Ethernet 10 ou 100 Mb/s, voire encore Gigabit Ethernet.

Une telle disposition permet d'interfacer un lien haut-débit grâce à un coupleur, notamment optique, et donc sans perturbation de ce lien. Du fait que l'échantillonneur ainsi que la sonde sont des éléments externes à la ligne, il s'avère que l'on peut adopter une telle sonde de type bas-débit sur une artère haut-débit.

L'ensemble présente en outre deux interfaces 120 et 280.

L'interface 120 est une interface de mesure. Elle est unidirectionnelle, et présente sa sortie en direction de l'échantillonneur 200.

Elle est du standard du lien à observer. Elle pourra par exemple supporter les standards suivants: POS STM16 (OC48), POS STM64 (OC192), 10 Gigabit Ethernet et plus, par exemple une interface à 40 Gb/s (STM256 OC768).

En outre, un module d'interface haut débit 150 réalise une adaptation entre le module échantillonneur 200 et l'interface 120.

Une interface 280 est placée en aval de l'interface bas débit 250. Cette interface 280 est une interface de contrôle et de récupération des paquets échantillonnés. Elle est bidirectionnelle. De ce fait, elle permet la configuration de l'échantillonneur 200 depuis l'aval de cet échantilloneur. Elle permet en outre, par sa bidirectionalité, le contrôle de l'interface physique 120 pour une configuration avant connexion à la sonde 300. Elle permet également la transmission du flux des échantillons en sortie de l'échantillonneur 200. Elle est par exemple à la norme PCI ou Ethernet 10/100/1000.

Le module d'interface bas-débits 250 réalise enfin l'adaptation avec la sortie.

Le module échantillonneur 200 réalise la fonction de choix des paquets à échantillonner par application d'une politique d'échantillonnage.

Plusieurs politiques d'échantillonnage peuvent être mises en oeuvre. Ce choix de politique est fait préférentiellement à l'initialisation et est maintenu tout au long d'une session de mesure.

Selon une première variante consistant en une décimation 1/N, on définit un taux d'échantillonnage N pouvant prendre sa valeur dans l'intervalle {10...10000} par exemple. Un paquet est gardé tous les N paquets entrants. Les autres paquets sont détruits.

Selon une seconde variante consistant en une décimation 1/N statistique, on définit un taux moyen d'échantillonnage N pouvant prendre sa valeur dans {10...10000} par exemple. Les instants d'échantillonnage suivent une loi statistique telle que : en moyenne un paquet sur N est gardé, le nombre de paquets refusé entre deux paquets gardés suit une loi statistique exponentielle ou autre.

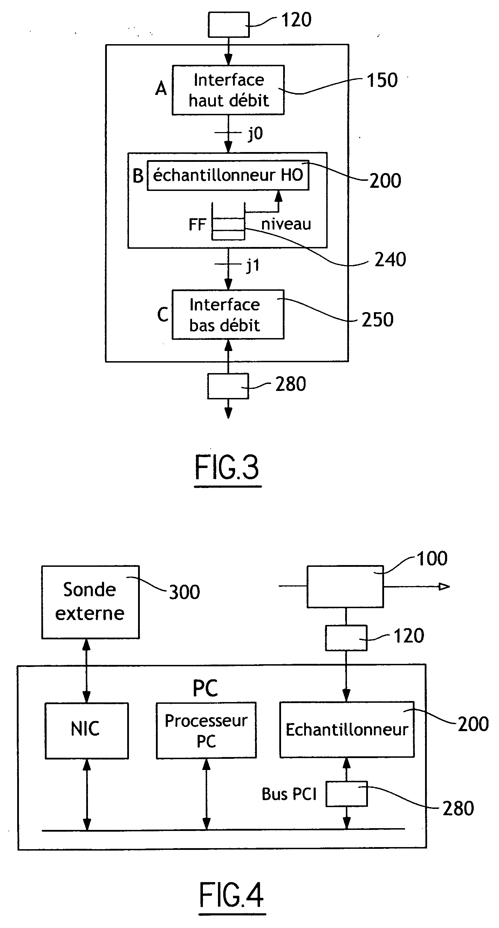

Selon une variante, on met en oeuvre un échantillonnage par mémoire FIFO (First In, First Out - premier entré, premier sorti). Cette variante correspond à une régulation de l'échantillonneur par la sortie. Le modèle équivalant à ce mode de fonctionnement est représenté à la figure 3.

Une mémoire FIFO 240 de type FF, est insérée dans l'échantillonneur 200 ou en aval de celui-ci.

A chaque arrivée de paquet le niveau de la mémoire 240 est lu par l'échantillonneur 200. Si le niveau de la FIFO est inférieur à un seuil fixé S le paquet arrivant est rangé dans la FIFO 240 et donc gardé. Si le niveau de la FIFO est supérieur à S le paquet est détruit. Par ailleurs, la FIFO 240 est vidée en permanence par l'interface bas-débit 280.

En d'autres termes, cette mémoire n'accepte qu'une partie des paquets arrivant sur elle, cette partie acceptée correspondant aux paquets arrivant lorsque la mémoire n'est momentanément pas saturée. On obtient ainsi un échantillonnage de régulation.

La mémoire FIFO est donc placée pour recevoir des paquets arrivant sur elle avec un débit élevé et délivrer en sortie des paquets avec un débit plus faible.

Dans une variante, on met en oeuvre une fonction de hachage. Pour cela, on choisit un ensemble de champs dans les paquets entrants et on applique une fonction de hachage, également connue sous le nom de « haching », sur ces champs. Le résultat de cette fonction permet de savoir si le paquet est gardé ou écarté de la capture.

Ces différentes variantes peuvent être intégrées sous la forme de différentes fonctions activables sélectivement dans l'échantillonneur, comme illustré sur la figure 2.

L'échantilloneur 200 a également pour rôle ici de gérer l'interface haut débit 150 (connaissance de son état, établissement de connexion éventuel, choix de certains paramètres spécifiques à la couche PPP).

Selon une réalisation possible (figure 4), le module échantillonneur 200 est équipé d'une interface 150 au même débit que le lien à étudier ainsi que d'une interface supplémentaire 280, qui est une interface PCI pour le couplage avec un PC (Personal Computer-Ordinateur personnel). Le PC peut alors faire la capture à bas débit (par exemple par l'intermédiaire d'un sniffeur 100 Mb/s).

Selon une autre variante de réalisation possible, l'interface 280 est une interface Fast Ethernet qui permet de relier la sonde 300 à un réseau ou à une autre sonde.

Le format des paquets transitant sur une telle interface 280 peut être conforme au format utilisé par les outils NETFLOW de la société CISCO.

Dans une variante où l'on souhaite interfacer des sondes du commerce telle que IPANEMA, il est nécessaire de revenir au cas précédent ou de passer les paquets par PCI à une carte NIC, ceci avec les inconvénients dus à la non-maîtrise du délai de transfert entre le module échantilloneur et la carte NIC via PCI. Cependant, le temps de latence maximum du PCI est faible comparé aux ordres de grandeurs de gigue du monde IP.

Dans l'exemple de la sonde IPANEMA, celle-ci effectue une mesure passive sur les flux réels. Pour ce faire, les sondes fonctionnent par paire. La sonde située en amont du flux calcule une signature sur la payload (charge) du paquet. La sonde en aval de ce même flux calcule également une signature sur la payload du paquet. Si la signature est identique, cela signifie qu'il s'agit du même flux.

Dans ce cas, il faut préférentiellement utiliser une fonction de hachage (la décimation 1/n est plutôt à éviter car il faut assurer qu'un paquet choisi par la sonde amont le sera également par la sonde aval) qui s'applique sur une partie des paquets qui n'est pas affectée par le routage ou la traversée des équipements. Des champs de niveau supérieur à 3 doivent être pris en compte.

## Revendications

1. Dispositif de capture de données sur un lien informatique, le dispositif de capture comprenant un échantillonneur de paquets (200), cet échantillonneur (200) étant prévu pour réaliser l'échantillonnage à l'extérieur du lien informatique, le dispositif de capture incluant un coupleur (100) qui raccorde l'échantillonneur (200) au lien informatique, **caractérisé en ce qu'**il inclut une interface haut-débit (150) placée entre l'échantillonneur (200) et le coupleur (100), et une interface bas-débit (250) en sortie de l'échantillonneur (200).

2. Dispositif selon la revendication 1, **caractérisé en ce que** le coupleur (100) est un coupleur apte à ne pas générer de perturbation sur le flux véhiculé par le lien.

3. Dispositif selon la revendication 1 ou la revendication 2, **caractérisé en ce qu'**il inclut, entre le coupleur (100) et l'échantillonneur (200), une interface de mesure (120) qui est unidirectionnelle est qui est prévue pour accepter des données selon une convention de transmission semblable à celle du lien.

4. Dispositif selon la revendication 1 et la revendication 3 en combinaison, **caractérisé en ce que** l'interface de mesure (120) est placée entre le coupleur (100) et l'interface haut-débit (150).

5. Dispositif selon l'une quelconque des revendications précédentes, **caractérisé en ce qu'**il comporte une interface de contrôle et de récupération de paquets échantillonnés (280), placée en aval de l'échantillonneur (200), cette interface étant bidirectionnelle pour permettre le contrôle d'éléments situés en amont de cette dernière à l'aide d'équipements situés en aval de cette dernière.

6. Dispositif selon la revendication 4, **caractérisé en ce que** l'interface de contrôle et de récupération des paquets (280) est située en aval de l'interface bas débit (250).

7. Dispositif selon la revendication précédente, **caractérisé en ce qu'**il inclut une sonde d'analyse (300) placée en aval de l'échantillonneur (200).

8. Dispositif selon la revendication précédente, **caractérisé en ce que** l'interface de contrôle et de récupération (280) est placée entre l'interface bas débit (250) et la sonde d'analyse (300).

9. Dispositif selon l'une quelconque des revendications précédentes, **caractérisé en ce que** l'échantillonneur (200) est programmé selon une loi statistique telle qu'il préleve un paquet tous les k paquets, k prenant des valeurs aléatoires selon une loi de probabilité telle que la moyenne des valeurs prises par k est un chiffre N prédéfini.

10. Dispositif selon l'une quelconque des revendications 1 à 8, **caractérisé en ce que** l'échantillonneur (200) inclut une mémoire (240) de type « First In First Out » (premier entré premier sorti) placée pour être alimentée en paquets avec un débit élevé et délivrer en sortie des paquets avec un débit plus faible, de sorte que cette mémoire (240) n'accepte qu'une partie des paquets arrivant sur elle, cette partie acceptée correspondant aux paquets arrivant lorsque la mémoire (240) n'est momentanément pas saturée.

11. Dispositif selon l'une quelconque des revendications 1 à 8, **caractérisé en ce que** l'échantillonneur (200) inclut des moyens choisissant un ensemble de champs dans les paquets entrants dans l'échantillonneur et appliquant une fonction de hachage sur ces champs, ces moyens réalisant en outre une prise en compte du résultat de ce hachage pour établir si un paquet est gardé ou écarté de la capture.

12. Procédé de capture de données sur un lien informatique, à l'aide d'un échantillonneur de paquets de données (200), dans lequel on place l'échantillonneur (200) de manière externe au lien à étudier, en reliant l'échantillonneur (200) au lien informatique par l'intermédiaire d'un coupleur (100), **caractérisé en ce que** l'on place une interface haut-débit (150) entre l'échantillonneur (200) et le coupleur (100) et une interface bas-débit (250) en sortie de l'échantillonneur (200).

13. Procédé de capture selon la revendication précédente, **caractérisé en ce que** le coupleur (100) est un coupleur apte à ne pas générer de perturbation sur le flux véhiculé par le lien.
